# EUROPEAN PATENT SPECIFICATION

(11) **EP 0 436 689 B1**
(45) Date of publication and mention of the grant of the patent: **05.04.1995**
(21) Application number: 90910652.8
(22) Date of filing: 01.08.1990
(51) Int. Cl.: C08L 3/02, C08L 23/08, C08J 9/08

(54) **EXPANDED ARTICLES OF BIODEGRADABLE PLASTICS MATERIALS AND A METHOD FOR THEIR PRODUCTION**
GESCHÄUMTE GEGENSTÄNDE AUS BIOLOGISCH ABBAUBAREN PRESSSTOFFEN UND VERFAHREN ZU IHRER HERSTELLUNG
ARTICLES EXPANSES EN MATIERE PLASTIQUE BIODEGRADABLE ET METHODE DE PRODUCTION

(30) Priority: 03.08.1989 IT 6766789
(43) Date of publication of application: 17.07.1991
(73) Proprietor: NOVAMONT S.p.A., 20121 Milano (IT)
(72) Inventor: BASTIOLI, Catia, I-28100 Novara (IT); BELLOTTI, Vittorio, I-28010 Fontaneto d'Agogna (IT); DEL GIUDICE, Luciano, I-20146 Milano (IT); LOMBI, Roberto, I-28100 Novara (IT); RALLIS, Angelos, I-28100 Novara (IT)
(74) Representative: Zanoli, Enrico
(86) International application number: EP9001252
(87) International publication number: WO9102023

(56) References cited:
- EP-A- 0 032 802
- EP-A- 0 087 847
- EP-A- 0 303 460
- EP-A- 0 327 505
- EP-A- 0 375 831
- US-A- 3 551 361

## Description

The present invention relates to expanded articles of biodegradable plastics material and to a method for producing such articles.

In recent years, many attempts have been made to produce biodegradable moulded articles. Amongst the various materials proposed for producing such articles, the starches are certainly the most desirable since they are cheap, natural products which are very abundant in nature and are completely biodegradable.

Published European patent application EP-A-304,401 describes a method for the injection-moulding of capsules from destructurized starch. The articles produced by this process, however, have poor mechanical properties as well as being very soluble in water.

Unpublished Italian patent application No. 41002-A/89 and the corresponding international application PCT/EP90/00375 (as yet unpublished) describe a method which enables the production of moulded articles with improved mechanical properties, in which the starch is mixed with an ethylene-acrylic acid copolymer, possibly with the addition of urea and/or ammonia in an extruder heated to a temperature of between 90 and 150°C. In this method, the water content of the extrusion is brought to less than 6% by weight, preferably less than 2% by weight, and the resulting composition is then extruded at a temperature of between 130 and 160°C.

EP-A-0 87 847 describes a process for preparing foamed gelatinized products made of starch, by heating granular or pulverized starch in an extruder press at a temperature of from 60 to 220°C in the presence of 10-30% wt of water and a gas-forming or gas-generating expanding agent. The obtained foamed material has open pores and high water solubility, which make it suitable for use only as packing material for the protection of fragile articles or as a sound-adsorbing or thermal insulating material or as a foodstuff.

The purpose of the present invention is to provide expanded articles which as well as being substantially biodegradable, are water insoluble and can be obtained by a conventional processing technique for thermoplastic materials such as extrusion or injection moulding and have mechanical properties such as bending strength and elongation comparable to conventional foamed plastics.

In view of that purpose, a first subject of the invention consists of expanded articles characterized in that they are made of a material including starch and synthetic polymer selected from the group consisting of ethylene-acrylic acid and ethylene-vinyl alcohol copolymers and mixtures thereof, such articles having a closed pore structure and a density of from 0.1 to 0.3 g/cm³.

The ethylene/vinyl alcohol copolymer which is used for the production of the expanded article has preferably an ethylene content of from 10 to 40% by weight (15-50% mol), more preferably of from 30 to 35% mol, with a melt flow index (230°C, 2.16 kg) of between 2 and 50, preferably between 6 and 20.

Further preferred features for the ethylene/vinyl alcohol copolymer are as follows:

| | |
|---|---|
| Intrinsic viscosity, (in DMSO at 30°C) | 0.50-0.9 preferably 0.65-0.80 |
| Molecular weight distribution Mw/Mn (GPC in tetrahydrofurane) | 1.3-4 |
| Melting point temperature | 180°C preferably 160-170°C |
| Hydrolysis degree * | 90-99.9% |

| | |
|---|---|
| * Basic hydrolysis and titration of the residual base with acid. | |

The preferred ethylene-acrylic acid copolymer (EAA) is that produced by copolymerization of a mixture including from 3 to 30%, preferably 20%, by weight of acrylic acid and, correspondingly, from 97 to 70%, preferably 80% by weight of ethylene.

The starch which is used comprises in general all the starches of a natural or vegetable origin, composed essentially of amylose and/or amylopectin. They can be extracted from various plants such as, for example, potatoes, rice, tapioca, maize and cereals such as rye, oats and wheat, maize starch is preferred. Chemically-modified starches can also be used as the starches.

The starch and the polymer may be used in a ratio of from 9:1 to 1:9 and preferably in a ratio of from 4:1 to 1:4, however the invention is particularly concerned with articles where the synthetic polymer constitutes from 20 to 40% wt referred to the total amount of starch and polymer.

The expanded articles according to the invention may be obtained with use of a physical expanding agent, such as carbon dioxide and n-pentane or of a chemical expanding agent, such as carbonate salts which are fed to the extrusion barrel together with the blend of starch and polymeric material.

According to a preferred method, use is made of sodium bicarbonate together with a polymeric acid compatible with starch.

A further subject of the invention is therefore constituted by a method for the production of expanded articles of biodegradable plastics material, characterized in that it includes the step of extruding a composition including starch and a synthetic polymer selected from the group consisting of ethylene-vinyl alcohol and ethylene-acrylic acid copolymers and mixtures thereof, in the presence of a polymeric acid and sodium bicarbonate as the expanding agent.

The use of sodium bicarbonate as a chemical expanding agent for the production of expanded articles of conventional synthetic plastic material is known; however, its use as the only expanding agent produces expanded plastics materials with rather poor properties in terms of expansion. In practice, therefore, the sodium bicarbonate is to advantage used only as a nucleating agent in conjunction with a physical expanding agent, as in the production of expanded polystyrene sheets, for example. Its use as an expanding agent for starch, as shown in the above mentioned EP-A-0 087 847, provides an open pore structure, which is unsuitable for the purposes of the present invention.

Within the scope of the method according to the invention, however, it has been found that in combination with the aforementioned polymeric acid, sodium bicarbonate has an effective expanding action which enables the production of expanded materials with densities down to 0.1 and generally between 0.1 and 0.3 g/cm³.

Without wishing to go into the physical-chemical mechanism of the expansion, it is thought possible that, in the method according to the invention, the expansion is not caused by the thermal decomposition of bicarbonate but takes place as a result of a chemical reaction between the carboxyl groups of the polymer used and the bicarbonate with the liberation of carbon dioxide and water.

The polymeric acid which is used, is preferably a polymer having lateral carboxyl groups such as polyacrylic acid, ethylene-acrylic acid copolymers (EAA) and ethylene-vinyl alcohol-acrylic acid copolymers. The same EAA copolymer which has been hereinabove defined may be used.

The extrusion temperature may range from 100 to 180°C depending upon the choice of the copolymer which is mixed with starch.

In the embodiment where the copolymer which is mixed with starch and the polymeric acid are-both an EAA copolymer, the extrusion temperature may be as low as 100 to 120°C and preferably between 100 and 110°C, i.e. below the temperature of thermal decomposition of the bicarbonate. The fact that, according to this embodiment, the best results in terms of expansion were achieved when the extrusion was carried out in an extruder heated to a temperature below the temperature of thermal decomposition of bicarbonate, corroborates the hypothesis that the expansion is caused by the generation of carbon dioxide and water as a result of the chemical reaction between the carboxyl groups of the polymeric acid and the bicarbonate.

The quantity of sodium bicarbonate added is at least 0.3 of the equivalent weight of the bicarbonate for each equivalent weight of free carboxyl groups in the polymeric acid.

In order to facilitate the expansion, nucleating agents, such as, for example, silicas may be included in the polymeric composition.

In order to further reduce the density of the foamed (extruded) articles, when desirable, it is advantageous to add to the polymeric composition within the extruder, as a filler, a pyrolized foamed starch, in granular form, as obtainable from the process of the above mentioned EP-A-0 087 847 or hollow glass microspheres in a quantity up to 30% wt with respect to the overall composition and preferably between 5 and 20% wt.

The extrusion process is carried out in such a way that the starch is substantially destructured and the starch phase interpenetrates the copolymer phase.

In order to encourage the destructuring of the starch, which has its own intrinsic water content generally of between 10 and 13% wt, water may be added up to a quantity of approximately 25% by weight of the weight of the dry starch. The water content of the final product however, must be less than 6% and preferably between 0 and 2% by weight.

The composition which is extruded may also include urea up to 30% of the total composition and highboiling plasticizers, such as glycerine, ethyl glycol and the like. Further additives may be considered in dependence on the desired characteristics and applications of the expanded material to be produced. The additives may include polymeric materials such as polyvinyl alcohol, conventional additives used in the preparation of plastics materials, such as UV stabilisers, flame-proofing agents, fungicides, herbicides, anti-oxidants, fertilisers, opacifying agents, antiblocking agents, lubricants and plasticizers.

Expanded articles can also be produced by the addition of sodium bicarbonate to pellets of starch and a compatible polymer produced beforehand by the method described in PCT/EP90/00375.

### Example 1

A composition was prepared, containing:
36% by weight of the starch GLOBE 3401 CERESTAR with a water content of 11%;
36% by weight of the Dow Chemical copolymer EAA 5981 with a 20% acrylic acid content;
6% by weight of water;
14% of urea, and
8% by weight of sodium bicarbonate.

The products were premixed and then supplied to an extruder for the extrusion of expanded tubing. The temperature in the extruder was kept within the range of between 100 and 110°C.

The expanded product had a density of approximately 0.15 g/cm³ with closed-cell dimensions of between 0.3 mm and 2 mm and elongation higher than 10%

### Example 2

A composition was prepared containing:
36% wt of the starch GLOBE 3401 CERESTAR
18% wt of the EAA copolymer DOW 5981
6% wt of water
9% wt of glycerine
5% wt of urea
18% ethylene-vinyl alcohol (ethylene comonomer content 30% mol)
8% wt sodium bicarbonate
The composition was mixed in the extruder barrel at 170°C and injection moulded to provide slab specimen having dimensions 3 x 120 x 20 mm.

The expanded product had a density of about 0.3 g/cm³ with closed-cell dimensions between 0.5 and 2.5 mm.

## Claims

1. Expanded articles of biodegradable plastics material characterised in that they are made of material including starch and a synthetic polymer selected from the group of poly-ethylene-vinyl alcohol and poly-ethylene-acrylic acid in a starch/polymer weight ratio of from 1:9 to 9:1 and mixtures thereof, said articles having a closed pore structure and a density of from 0.1 to 0.3 g/cm³.

2. Expanded articles according to claim 1, wherein the ethylene-vinyl alcohol copolymer has an ethylene content of from 10 to 40% by weight and a melt flow index of from 6 to 20, (230°C, 2.16 Kg).

3. Expanded articles according to claim 1, wherein the ethylene-acrylic acid copolymer is produced by the copolymerization of a mixture including from 3 to 20% by weight of acrylic acid and from 97 to 70% of ethylene.

4. Expanded articles according to claim 1, in which the starch and the copolymer are in a weight ratio of from 1:4 to 4:1.

5. Expanded articles according to claim 1, further including urea and/or a high-boiling plasticizer.

6. Expanded articles according to claim 1, further including a polymeric acid selected from the group consisting of ethylene-acrylic acid, polyacrylic acid, and ethylene-acrylic acid-vinyl alcohol copolymer.

7. Expanded articles according to claim 1, including a filler consisting of granular pyrolized foamed starch or hollow glass microspheres.

8. A method for the production of expanded articles of biodegradable plastics material, characterized, in that it includes the step of extruding a composition including starch and a synthetic polymer selected from the group of poly-ethylene-vinyl alcohol and poly-ethylene-acrylic acid in a starch/polymer weight ratio of from 1:9 to 9:1 in the presence of a polymeric acid and sodium bicarbonate as the expanding agent.

9. A method according to claim 8 wherein the polymeric acid is selected from the group consisting of polyacrylic acid, poly-ethylene-acrylic acid and poly-ethylene-acrylic acid-vinyl alcohol copolymers.

10. A method according to claim 8 in which the copolymer is produced by a copolymerization of a mixture including from 3 to 20% by weight of acrylic acid and from 97 to 70% of ethylene.

11. A method according to claim 8 wherein the ethylene vinyl alcohol copolymer has an ethylene content of from 10 to 40% by weight and a melt flow index of from 6 to 20.

12. A method according to claim 8 wherein the quantity of sodium bicarbonate added is equal to at least 0.3 equivalents of the bicarbonate for each equivalent weight of free carboxyl groups in the polymeric acid.

13. A method according to claim 8, in which the starch and the copolymer are in a ratio of from 4:1 to 1:4.

14. A method according to claim 8, in which the composition includes a quantity of urea of up to 30% by weight of the total weight of the composition and/or a high-boiling plasticizer.

15. A method according to claim 8, wherein both the copolymer and the polymeric acid are poly-ethylene-acrylic acid and wherein the composition is mixed in an extruder barrel heated to a temperature of between 100°C and the temperature of thermal decomposition of the bicarbonate.

16. A method according to claim 8, in which the composition includes a quantity of water of from 10 to 25% by weight of the weight of the dry starch.

## Patentansprüche

1. Verschäumte Gegenstände aus biologisch abbaubarem Kunststoffmaterial, dadurch gekennzeichnet, daß sie aus einem Material bestehen, das Stärke und ein synthetisches Polymer umfaßt, ausgewählt aus der Gruppe von Poly-Ethylen-Vinylalkohol und Poly-Ethylen-Acrylsäure in einem Gewichtsverhältnis von Stärke/Polymer von 1:9 bis 9:1, und Mischungen davon, wobei die genannten Gegenstände eine geschlossene Porenstruktur und eine Dichte von 0,1 bis 0,3 g/cm³ aufweisen.

2. Verschäumte Gegenstände nach Anspruch 1, worin das Ethylen-Vinylalkohol-Copolymer einen Ethylengehalt von 10 bis 40 Gew.-% und einen Schmelzflußindex von 6 bis 20 (230° C, 2,16 kg) aufweist.

3. Verschäumte Gegenstände nach Anspruch 1, worin das Ethylen-Acrylsäure-Copolymer duch Copolymerisation einer Mischung hergestellt wurde, die von 3 bis 20 Gew.-% Acrylsäure und von 97 bis 70 % Ethylen umfaßt.

4. Verschäumte Gegenstände nach Anspruch 1, worin die Stärke und das Copolymer in einem Gewichtsverhältnis von 1:4 bis 4:1 vorliegen.

5. Verschäumte Gegenstände nach Anspruch 1, die weiterhin Harnstoff und/oder einen Weichmacher mit hohem Siedepunkt umfassen.

6. Verschäumte Gegenstände nach Anspruch 1, die weiterhin eine polymere Säure umfassen, ausgewählt aus der Gruppe von Ethylen-Acrylsäure, Polyacrylsäure und Ethylen-Acrylsäure-Vinylalkohol-Copolymer.

7. Verschäumte Gegenstände nach Anspruch 1, die ein Füllmittel, bestehend aus körniger, pyrolyisierter, geschäumter Stärke oder hohlen Glasmikrokügelchen, umfaßt.

8. Verfahren zur Herstellung verschäumter Gegenstände aus biologisch abbaubarem Kunststoffmaterial, dadurch gekennzeichnet, daß dieses den Schritt des Extrudierens einer Zusammensetzung aufweist, die Stärke und ein synthetisches Polymer umfaßt, ausgewählt aus der Gruppe von Poly-Ethylen-Vinylalkohol und Poly-Ethylen-Acrylsäure in einem Gewichtsverhältnis von Stärke/Polymer von 1:9 bis 9:1, in Anwesenheit einer polymeren Säure und Natriumbicarbonat als Verschäumungsmittel.

9. Verfahren nach Anspruch 8, worin die polymere Säure ausgewählt wird aus der Gruppe von Polyacrylsäure, Poly-Ethylen-Acrylsäure und Poly-Ethylen-Acrylsäure-Vinylalkohol-Copolymeren.

10. Verfahren nach Anspruch 8, worin das Copolmer durch Colpolymerisation einer Mischung hergestellt wird, die von 3 bis 20 Gew.-% Acrylsäure und von 97 bis 70% Ethylen umfaßt.

11. Verfahren nach Anspruch 8, worin das Ethylen-Vinylalkohol-Copolymer einen Ethylengehalt von 10 bis 40 Gew.-% und einen Schmelzflußindex von 6 bis 20 aufweist.

12. Verfahren nach Anspruch 8, worin die Menge an zugefügtem Natriumbicarbonat wenigstens 0,3 Äquivalenten an Bicarbonat für jede Äquivalentgewichtseinheit an freien Carbonsäuregruppen in der Polymersäure entspricht.

13. Verfahren nach Anspruch 8, worin die Stärke und das Copolymer in einem Verhältnis von 4:1 bis 1:4 vorliegen.

14. Verfahren nach Anspruch 8, worin die Zusammensetzung eine Menge an Harnstoff bis zu 30 Gew.-% des Gesamtgewichts der Zusammensetzung und/oder einen Weichmacher mit hohem Siedepunkt enthält.

15. Verfahren nach Anspruch 8, worin sowohl das Copolymer als auch die polymere Säure Poly-Ethylen-Acrylsäure sind und worin die Zusammensetzung in einem Extrudierzylinder vermischt und auf eine Temperatur zwischen 100° C und der thermischen Zersetzungstemperatur des Bicarbonats erhitzt wird.

16. Verfahren nach Anspruch 8, worin die Zusammensetzung eine Menge an Wasser von 10 bis 25 Gew.-%, bezogen auf das Gewicht der trockenen Stärke, enthält.

## Revendications

1. Objets expansés en matériau plastique biodégradable, caractérisés en ce qu'ils sont obtenus à partir d'un matériau comprenant de l'amidon et un polymère de synthèse choisi dans le groupe consistant en poly(éthylène/vinylalcool) et poly(éthylène/acide acrylique) et leur mélange, selon un rapport pondéral amidon/polymère de 1/9 à 9/1, lesdits objets ayant une structure à pores fermées et une densité de 0,1 à 0,3 g/cm³.

2. Objets expansés selon la revendication 1, dans lesquels le copolymère éthylène/vinylalcool présente une teneur en éthylène de 10 à 40% en poids et un indice d'écoulement à l'état fondu MFI de 6 à 20, mesuré à 230°C, sous 2,16 kg.

3. Objets expansés selon la revendication 1, dans lesquels le copolymère éthylène/acide acrylique est produit par copolymérisation d'un mélange incluant de 3 à 20% en poids d'acide acrylique et de 97 à 70% en poids d'éthylène.

4. Objets expansés selon la revendication 1, dans lesquels l'amidon et le copolymère sont présents selon un rapport pondéral de 1/4 à 4/1.

5. Objets expansés selon la revendication 1, comprenant de plus de l'urée et/ou un plastifiant à point d'ébullition élevé.

6. Objets expansés selon la revendication 1, comprenant de plus un acide polymère choisi dans le groupe consistant en copolymère éthylène/acide acrylique, acide polyacrylique et copolymère éthylène/acide acrylique/vinylalcool.

7. Objets expansés selon la revendication 1, incluant une charge consistant en amidon granulaire pyrolysé sous forme de mousse ou des microsphères creuses en verre.

8. Un procédé de production d'objets expansés à base d'un matériau plastique biodégradable, caractérisé en ce qu'il comprend l'étape d'extrusion d'une composition incluant de l'amidon et un polymère de synthèse choisi dans le groupe consistant en poly(éthylène/vinylalcool) et poly(éthylène/acide acrylique) selon un rapport pondéral amidon/polymère de 1/9 à 9/1 en présence d'un acide polymère et de bicarbonate de sodium en tant qu'agent d'expansion.

9. Un procédé selon la revendication 8, dans lequel l'acide polymère est choisi dans le groupe consistant en acide polyacrylique, poly(éthylène/acide acrylique) et copolymères éthylène/acide acrylique/vinylalcool.

10. Un procédé selon la revendication 8, dans lequel le copolymère est produit par une copolymérisation d'un mélange incluant de 3 à 20% en poids d'acide acrylique et de 97 à 70% d'éthylène.

11. Un procédé selon la revendication 8, dans lequel le copolymère éthylène/vinylalcool présente une teneur en éthylène de 10 à 40% en poids et un indice d'écoulement à l'état fondu de 6 à 20.

12. Un procédé selon la revendication 8, dans lequel la quantité de bicarbonate de sodium ajoutée est égale à au moins 0,3 équivalent de bicarbonate pour chaque équivalent en poids de groupes carboxyles libres dans l'acide polymère.

13. Un procédé selon la revendication 8, dans lequel l'amidon et le copolymère sont présents selon un rapport de 4/1 à 1/4.

14. Un procédé selon la revendication 8, dans lequel la composition inclut une quantité d'urée, pouvant atteindre 30% en poids du poids total de la composition et/ou un plastifiant à point d'ébullition élevée.

15. Un procédé selon la revendication 8, dans lequel tant le copolymère que l'acide polymère sont un poly(éthylène/acide acrylique) et dans lequel la composition est mélangée dans un cylindre d'extrudeuse chauffé à une température comprise entre 100°C et la température de décomposition thermique du bicarbonate.

16. Un procédé selon la revendication 8, dans lequel la composition inclut une quantité d'eau comprise entre 10 et 25% en poids par rapport au poids d'amidon sec.
